Europäisches Patentamt

**European Patent Office**

**Office européen des brevets**

(11) Numéro de publication: **0 303 735**
**B1**

(12) **FASCICULE DE BREVET EUROPEEN**

(45) Date de publication du fascicule du brevet:
**12.12.90**

(51) Int. Cl.⁵: **F17C 13/04, G05D 16/06**

(21) Numéro de dépôt: **87115269.0**

(22) Date de dépôt: **09.01.85**

(60) Numéro de publication de la demande initiale en application
de l'article 76 CBE: **0150143**

(54) **Appareil détendeur perfectionné.**

(30) Priorité: **19.01.84 FR 8400819**
**14.12.84 FR 8419207**

(43) Date de publication de la demande:
**22.02.89 Bulletin 89/8**

(45) Mention de la délivrance du brevet:
**12.12.90 Bulletin 90/50**

(84) Etats contractants désignés:
**AT BE CH DE GB IT LI LU NL SE**

(56) Documents cités:
**US-A- 3 900 045**

(73) Titulaire: **CLESSE-MANDET, 11 Avenue Gabriel-Péri,
F-78360 Montesson(FR)**

(72) Inventeur: **Lacour, Gilbert, 41 rue Camille Corot,
F-92500 Rueil Malmaison(FR)**

(74) Mandataire: **Durand, Yves Armand Louis et al, Cabinet Z.
Weinstein 20, Avenue de Friedland, F-75008 Paris(FR)**

## Description

La présente invention a essentiellement pour objet un détendeur perfectionné utilisable dans des installations de distribution de gaz comprimé ou liquéfié, tel que gaz de ville, gaz butane, gaz propane etc....

On a déjà utilisé, pour des installations domestiques alimentées en gaz combustible, des détendeurs du type comprenant essentiellement un corps avec raccord d'entrée et de sortie du gaz, un couvercle monté sur ce corps, et une membrane manométrique retenue entre corps et couvercle et sur les deux faces de laquelle s'exercent respectivement la pression du gaz à contrôler et l'action d'un ressort de tarage.

Dans ces détendeurs, la membrane manométrique est généralement attelée à une tringlerie, un levier ou analogue susceptible de commander un clapet en regard de l'orifice d'entrée du gaz dans le corps du détendeur. Ainsi, l'écoulement du gaz dans le détendeur peut être arrêté en cas de fermeture du débit de gaz ou en cas d'incident de fonctionnement.

Toutefois, dans les détendeurs connus du type ci-dessus, la tringlerie attelée à la membrane et portant le clapet augmente le nombre de pièces à prévoir à l'intérieur du détendeur, et accroît nécessairement les difficultés de montage de l'appareil ainsi que son encombrement, ce qui rend parfois son installation difficile sur des conduites de gaz peu accessibles. Il faut aussi ajouter que la complexité mécanique de ces détendeurs les rend coûteux et, comme on le comprend leur fiabilité est d'autant plus aléatoire que les pièces qu'ils contiennent sont nombreuses.

On connait par ailleurs, d'après le document US-A-3.900.045 un appareil détendeur à membrane ayant les caractéristiques du préambule de la revendication 1, dont le couvercle comporte une butée faisant saillie vers l'intérieur du détendeur et sur laquelle peut prendre appui et pivoter la membrane, la position de la butée sur le couvercle étant telle qu'elle partage en deux surfaces inégales la membrane qui possède donc une fonction de levier susceptible d'obturer l'entrée du gaz dans le corps de l'appareil.

Mais la fiabilité de fonctionnement d'un tel appareil n'est pas satisfaisante s'il se produit des incidents en cours de fonctionnement, et tels que notamment une augmentation anormale de la pression du gaz dans le corps de l'appareil.

La présente invention a pour but de remédier notamment aux inconvénients ci-dessus en proposant un détendeur perfectionné remplissant toutes les fonctions de sécurité désirées, d'une conception mécanique particulièrement simple et donc peu coûteuse, et présentant une excellente fiabilité de fonctionnement.

A cet effet, l'invention a pour objet un appareil détendeur pour gaz du type comprenant un corps avec raccord d'entrée et de sortie de gaz, un couvercle monté sur ce corps, une membrane manométrique montée entre corps et couvercle et sur les deux faces de laquelle s'exercent respectivement la pression du gaz à contrôler et l'action d'un ressort de tarage, et au moins une première butée faisant saillie depuis le couvercle vers l'intérieur du détendeur et sur laquelle peut prendre appui et pivoter une partie rigide de ladite membrane, la position de cette butée sur le couvercle étant telle qu'elle partage en deux surfaces inégales ladite membrane qui possède ainsi une fonction de levier susceptible d'obturer l'entrée du gaz dans le corps de l'appareil, caractérisé en ce que la membrane précitée coopérant avec la première butée coopère également avec des moyens formant soupape de sûreté ou clapet de sécurité en cas d'augmentation anormale de la pression du gaz dans le corps de l'appareil.

Suivant une autre caractéristique de l'invention, la première butée étant constituée par un ressort, les moyens précités sont constitués par une autre butée solidaire du corps de l'appareil, située sensiblement au droit du ressort de l'autre côté de la membrane, et pourvue d'un alésage ou analogue débouchant dans ledit corps, obturable par ladite membrane et communiquant avec l'atmosphère extérieure.

Selon un autre mode de réalisation, la première butée étant constituée par un ressort, les moyens précités sont constitués par une bille disposée dans un logement formé dans le corps, située sensiblement au droit du ressort de l'autre côté de la membrane, et susceptible d'obturer un trou ménagé dans ladite membrane.

Selon une autre caractéristique du mode de réalisation ci-dessus, une tige est solidaire du couvercle et disposée dans l'axe du ressort et du trou précités.

Suivant une autre variante, les moyens précités formant soupape de sûreté sont constitués par un élément formant palonnier attelé à un ou plusieurs clapets obturant des orifices ménagés dans la membrane grâce à des ressorts prévus entre celle-ci et le palonnier, tandis que la première butée coopère avec la membrane par l'intermédiaire dudit palonnier.

Suivant encore un mode de réalisation, les moyens formant soupape de sûreté sont constitués par un clapet avec ressort logé à l'intérieur du raccord d'entrée de gaz dans le corps de l'appareil et coopérant avec la membrane, tandis que de l'autre côté de la membrane, la première butée est montée coulissante et retenue dans un boîtier solidaire du couvercle de l'appareil.

On ajoutera ici que la première butée précitée est constituée par une tige pourvue d'une gorge coopérant avec des billes sollicitées par un ressort, tandis que le boîtier précité comporte en partie basse et en regard de la membrane une partie débouchante sensiblement conique, et, en partie haute, un couvercle d'accès au boîtier.

Mais d'autres caractéristiques et avantages de l'invention apparaîtront mieux dans la description détaillée qui suit et se réfère aux dessins annexés, donnés uniquement à titre d'exemple et dans lesquels :

Les figures 1, 2, 3, et 5 sont des vues schématiques en coupe axiale montrant respectivement quatre modes de réalisation d'un appareil détendeur conforme aux principes de l'invention et comprenant des moyens de sécurité en cas de surpression de gaz dans l'appareil, et

La figure 4 est une vue en coupe du détendeur visible sur la figure 3, faite sensiblement suivant la ligne IV-IV de cette figure.

En se reportant aux dessins, on voit que l'appareil détendeur selon cette invention comprend un corps 1 acec raccord d'entrée 2 et de sortie 3 de gaz, un couvercle 4 monté sur ce corps, une membrane manométrique 5 montée entre corps et couvercle et sur les deux faces de laquelle s'exercent respectivement la pression du gaz à contrôler et l'action d'un ressort de tarage 8. Un élément formant butée 10 fait saillie depuis le couvercle 4 vers l'intérieur du détendeur. Sur l'élément 10 peut prendre appui et pivoter la membrane 5, la position de cet élément 10 sur le couvercle étant telle qu'il partage en deux surfaces inégales ladite membrane qui possède ainsi une fonction de levier susceptible d'obturer l'entrée du gaz dans le corps de l'appareil.

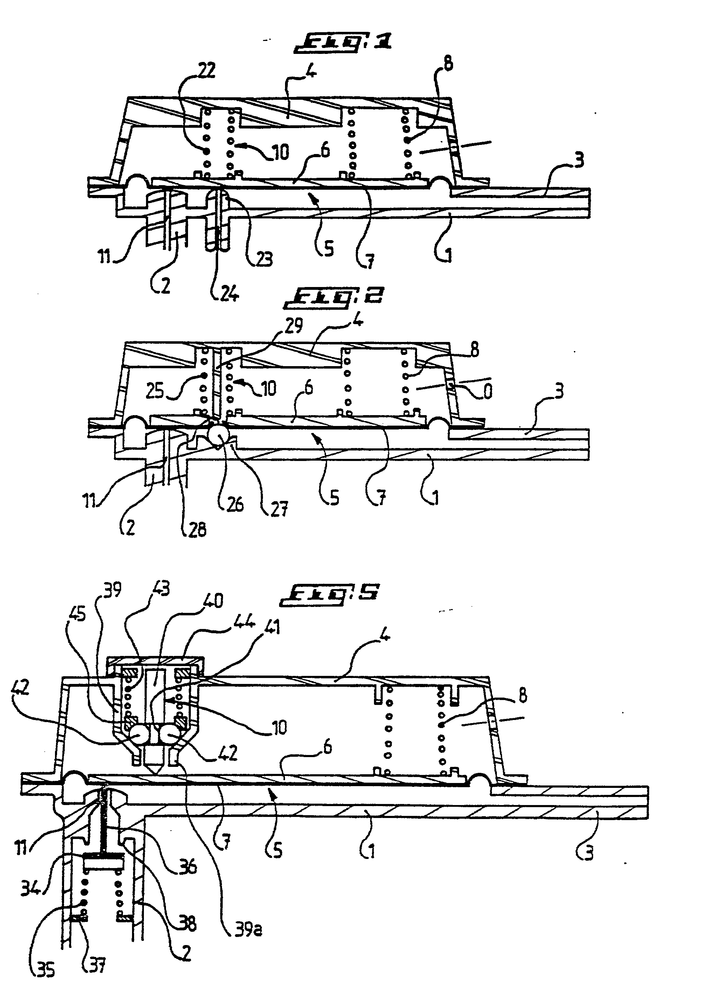

Suivant le mode de réalisation représenté sur la figure 1, l'élément 10 est constitué par un ressort 22 agencé entre le fond du couvercle 4 et le plateau 6 de la membrane 5, laquelle membrane prend ainsi élastiquement appui contre une butée 23 solidaire du corps 1 de l'apparail et située au droit du ressort 22 de l'autre côté de la membrane 5. La butée 23 est pourvue d'un trou ou alésage 24 communiquant avec l'atmosphère extérieure et débouchant dans la chambre définie par le corps 1 et la membrane 5. Cette dernière est appliquée en permanence sur la butée 23 de façon à pouvoir osciller et obturer le trou 24.

Mais on décrira brièvement ci-après le fonctionnement de cette réalisation.

Lorsque le débit demandé à la sortie 3 est nul, la membrane 5 prend sa position d'équilibre en prenant appui sur la butée 23 et vient obturer l'orifice 11 d'entrée de gaz. Si, pour une raison ou pour une autre, une légère fuite subsiste au niveau de l'orifice 11, la pression augmentera sous la membrane 5 jusqu'à dépasser la force de compression du ressort 22. Dès lors, la membrane 5 décollera de la butée 23 et découvrira l'orifice 24, permettant ainsi l'évacuation de la surpression de gaz vers l'atmosphère extérieure. On comprend donc que la butée 23, coopérant avec la membrane 5, joue en quelque sorte le rôle d'une soupape de sûreté en cas de surpression de gaz dans le corps du détendeur.

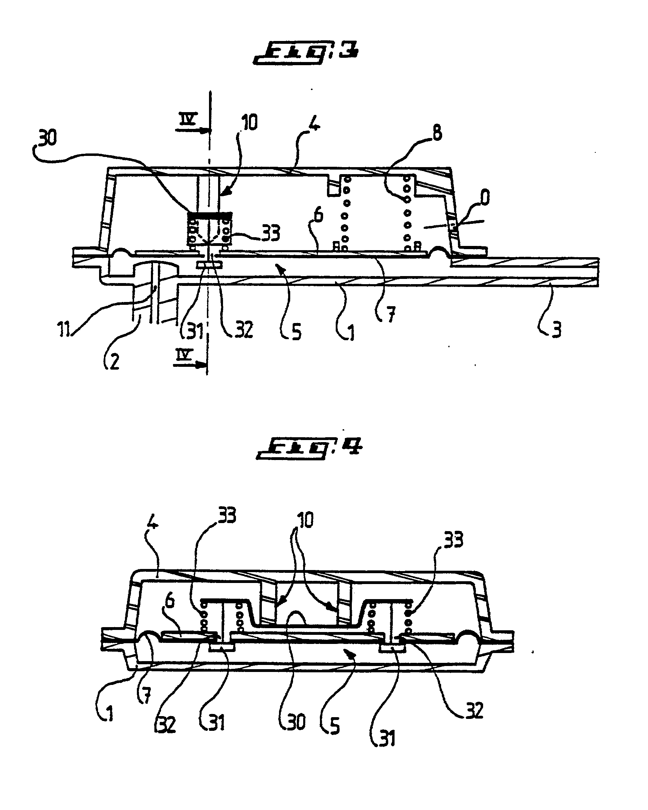

Suivant l'exemple de réalisation représenté sur la figure 2, l'élément 10 est, comme précédemment, constitué par un ressort 25 agencé entre le couvercle 4 et le plateau 6 de la membrane 5. Mais ici, on prévoit de l'autre côté de la membrane, une bille 26 disposée dans un logement 27 formé dans le corps 1. La bille 26 est située sensiblement au droit du ressort 25 et est susceptible d'obturer un trou 28 ménagé dans ladite membrane. Une tige ou analogue 29, solidaire du couvercle 4 et faisant saillie vers l'intérieur de l'appareil, est disposée dans l'axe du ressort 25 et du trou 28 de la membrane 5.

Le fonctionnement de l'appareil visible sur la figure 2 est le suivant.

Lorsque le débit est nul, la membrane 5 prend sa position d'équilibre sur la bille 26 en obturant l'orifice d'entrée de gaz 11.

Si le gaz provenant de l'orifice 11 produit une surpression, la membrane 5 se soulève à l'endroit de son articulation ou pivotement sur la bille 26. C'est dire que le trou 28 de la membrane 5 étant dégagé, la surpression de gaz sera évacuée dans la partie supérieure du détendeur pour finalement s'échapper par l'orifice 0 prévu dans le couvercle 4. On notera ici que la tige 29 empêche avantageusement la bille 26 de suivre la membrane 5 lorsqu'elle se soulève. On comprend donc que la bille 26, coopérant avec la membrane 5, forme une soupape de sûreté en cas de surpression anormale du gaz dans la chambre inférieure du détendeur.

On se reportera maintenant aux figures 3 et 4 pour décrire une autre variante d'appareil détendeur conforme à l'invention.

Les moyens permettant d'éliminer toute surpression anormale de gaz parvenant au détendeur sont ici constitués par un élément formant palonier 30 attelé à deux clapets 31 obturant respectivement des orifices 32 ménagés dans la membrane 5, grâce à des ressorts 33 prévus entre celle-ci et le palonnier 30. Il est à noter ici que l'élément 10, qui est constitué par deux têtons ou analogues, comme on le voit sur la figure 4, coopère avec la membrane 5 par l'intermédiaire du palonnier 30. On pourrait très bien prévoir un seul ou plus de deux clapets tels que 31, sans sortir du cadre de l'invention.

Le fonctionnement de cet appareil est le suivant.

Lorsqu'une surpression de gaz se produit sous la membrane 5, celle-ci se soulève en comprimant les ressorts 33, le palonnier 30 demeurant en appui sur l'élément 10. Dès lors, les orifices 32 sont dégagés des clapets 31 et le gaz passe au travers de ces orifices vers le couvercle 4 pour être finalement évacué vers l'extérieur par l'orifice 0 visible sur la figure 3.

On remarquera ici que, comme pour les modes de réalisation précédents, l'élément 10 du couvercle 4 partage en deux surfaces inégales la membrane 5 sur laquelle elle prend appui par l'intermédiaire du palonnier 30 de sorte que ladite membrane possède une fonction de levier susceptible d'obturer directement l'entrée 11 du gaz, comme on le voit bien sur la figure 3.

Enfin, on ajoutera que le palonnier 30 et ses clapets associés 31 jouent encore ici le rôle d'une soupape de sûreté en cas de surpression dans le détendeur.

On se reportera enfin à la figure 5 pour décrire un autre mode de réalisation d'apparail détendeur conforme à l'invention.

Les moyens prévus pour remédier à une surpression éventuelle de gaz dans le détendeur sont ici essentiellement constitués par un clapet 34 avec ressort 35 logé à l'intérieur du raccord d'entrée de gaz 2 dans le corps 1 de l'appareil. Le ressort 35 est agencé entre un épaulement 37 prévu dans le raccord 2, et le dessous du clapet 34, tandis que le dessus de ce clapet est équipé d'une tige ou analogue 36 passant au travers de l'orifice 11 et pouvant coopérer par son extrémité avec la membrane 5.

Le clapet 34 peut coopérer avec un siège 38 ménagé dans le raccod d'entrée 2.

L'élément 10, comme on le voit clairement sur la figure 5, est monté coulissant et retenu dans un boîtier 39 solidaire du couvercle 4 du détendeur. Cet élément 10 est ici constitué par une tige 40 pourvue d'une gorge 41 coopérant avec des billes 42 sollicitées par un ressort 43 dans l'axe duquel est disposée la tige 40. Comme on le voit bien sur la figure 5, le ressort 43 applique les billes 42 dans la gorge 41 de la tige 40, par l'intermédiaire d'une rondelle d'appui 45.

Le boîtier 39 forme en partie basse et en regard de la membrane 5 une partie sensiblement conique 39a de laquelle fait saillie la tige 40 pour pouvoir prendre appui sur le plateau rigide 6 de la membrane 5. A sa partie supérieure, le boîtier 39 dans lequel l'élément 10 est maintenu en place grâce aux billes 42, comporte un couvercle 44 permettant l'accès à l'intérieur dudit boîtier pour réenclencher ou réarmer le détendeur en cas de surpression anormale de gaz.

Mais on décrira ci-après le fonctionnement de ce détendeur qui est du type à réarmement.

S'il se produit une surpression dans la cuve ou corps 1 du détendeur, la membrane 5 se soulève et tend à pousser vers le haut la tige 40. Celle-ci est libérée puisque, sous l'effort de poussée, les billes 42 elles aussi poussées à l'encontre de la force du ressort 43, se dégagent de la gorge 41. En se soulevant, la membrane 5 qui coopère avec la tige 36 du clapet 34, libère ledit clapet 34 qui, sous l'action du ressort 35, vient s'appliquer sur le siège 38 pour obturer l'entrée de gaz 11.

Après disparition de la surpression de gaz, l'appareil demeure déclenché, c'est-à-dire que le clapet 34 demeure fermé. Et, pour réarmer l'appareil, il suffit de retirer le couvercle ou bouchon 44 pour appuyer sur la tige 40 afin de provoquer son réenclenchement avec les billes 42.

Bien entendu, on pourrait parfaitement prévoir que la tige 40 fasse saillie du boîtier 39 pour que l'utilisateur puisse procéder lui-même au réarmement de l'appareil, ce qui n'est pas le cas s'il y a un bouchon ou couvercle 44 justement prévu pour nécessiter l'intervention d'un spécialiste.

On voit que l'appareil détendeur selon la figure 5 est différent des autres modes de réalisation en ce qu'on a prévu volontairement ici un clapet de sécurité signalant l'apparition d'un défaut de surpression à l'utilisateur et nécessitant un intervention pour le réarmement, ce qui n'est pas le cas avec les modes de réalisation des figures 1 à 4 où le fonctionnement du détendeur est rétabli automatiquement après disparition du défaut de surpression.

**Revendications**

1. Appareil détendeur pour gaz du type comprenant un corps (1) avec raccord d'entrée (2) et de sortie (3) de gaz, un couvercle (4) monté sur ce corps, une membrane manométrique (5) montée entre corps et couvercle et sur les deux faces de laquelle s'exercent respectivement la pression du gaz à contrôler et l'action d'un ressort de tarage (8), et au moins une première butée (10) faisant saillie depuis le couvercle (4) vers l'intérieur du détendeur et sur laquelle peut prendre appui et pivoter une partie rigide de ladite membrane, la position de cette butée (10) sur le couvercle étant telle qu'elle partage en deux surfaces inégales ladite membrane qui possède ainsi une fonction de levier susceptible d'obturer l'entrée du gaz dans le corps de l'appareil, caractérisé en ce que la membrane précitée (5) coopérant avec la première butée (10) coopère également avec des moyens formant soupape de sûreté ou clapet de sécurité en cas d'augmentation anormale de la pression du gaz dans le corps (1) de l'appareil.

2. Appareil selon la revendication 1, caractérisé en ce que la première butée (10) étant constituée par un ressort (22), les moyens précités sont constitués par une autre butée (23) solidaire du corps (1) de l'appareil, située sensiblement au droit du ressort (22) de l'autre côté de la membrane (5), et pourvue d'un alésage ou analogue (24) débouchant dans ledit corps, obturable par ladite membrane et communiquant avec l'atmosphère extérieure.

3. Appareil selon la revendication 1, caractérisé en ce que la première butée (10) étant constituée par un ressort (25), les moyens précités sont constitués par une bille (26) disposée dans un logement (27) formé dans le corps (1), située sensiblement au droit du ressort (25) de l'autre côté de la membrane (5), et susceptible d'obturer un trou (28) ménagé dans ladite membrane.

4. Appareil selon la revendication 3, caractérisé par une tige (29) solidaire du couvercle (4) et disposée dans l'axe du ressort (25) et du trou (28).

5. Appareil selon la revendication 1, caractérisé en ce que les moyens précités sont constitués par un élément formant palonnier (30) attelé à un ou plusieurs clapets (31) obturant des orifices (32) ménagés dans la membrane (5) grâce à des ressorts (33) prévus entre celle-ci et le palonnier, tandis que la première butée (10) coopère avec la membrane par l'intermédiaire dudit palonnier.

6. Appareil selon la revendication 1, caractérisé en ce que les moyens précités sont constitués par un clapet (34) avec ressort (35) logé à l'intérieur du raccord d'entrée de gaz (2) dans le corps (1) de l'appareil et coopérant avec la membrane (5), tandis que de l'autre côté de la membrane, la première butée (10) est montée coulissante et retenue dans un boîtier (39) solidaire du couvercle (4) de l'appareil.

7. Appareil selon la revendication 6, caractérisé en ce que la première butée (10) est constituée par une tige (40) pourvue d'une gorge (41) coopérant avec des billes (42) sollicitées par un ressort (43).

8. Appareil selon la revendication 6 ou 7, caractérisé en ce que le boîtier précité comporte en partie basse et en regard de la membrane une partie débouchante sensiblement conique (39a), et, en partie haute, un couvercle (44) d'accès au boîtier.

**Patentansprüche**

1. Gasdruckminderventilgerät, der Gattung mit einem Körper (1) mit Gaseinlass- und Auslassanschlusstück (2 und 3), einem an diesem Körper angeordneten Deckel (4) einer zwischen Körper und Deckel angeordneten manometrischen Membran (5) auf deren beiden Seiten jeweils der Druck des zu überwachenden Gases und die Wirkung einer Eichungsfeder (8) ausgeübt werden, und wenigstens einem ersten von dem Deckel (4) nach innen des Druckminderventils hervorstehenden Anschlag (10) an welchem ein starrer Teil der besagten Membran abstützbar und verschwenkbar ist, wobei die Lage dieses Anschlags (10) an dem Deckel derart ist, dass er die besagte Membran in zwei ungleichen Flächen teilt, welche somit eine den Gaseinlass in den Körper des Gerätes abschliessende Hebelfunktion besitzt, dadurch gekennzeichnet, dass die mit dem ersten Anschlag (10) zusammenwirkende vorgenannte Membran (5) ebenfalls mit ein Sicherheitsventil bzw. eine Entlastungsklappe im Falle einer anormalen Zunahme des Gasdruckes in dem Körper (1) des Gerätes bildenden Mitteln zusammenwirkt.

2. Gerät nach Anspruch 1, dadurch gekennzeichnet, dass, wenn der erster Anschlag (10) durch eine Feder (22) gebildet wird, die vorgenannten Mittel aus einem weiteren, mit dem Körper (1) des Gerätes festverbundenen, im wesentlichen mit der Feder (22) auf der anderen Seite der Membran (5) fluchtend gelegenen Anschlag (23) bestehen, der mit einer in den besagten Körper mündenden, durch die besagte Membran verschliessbaren und mit der Aussenluft in Verbindung stehenden Bohrung oder dergleichen (24) versehen ist.

3. Gerät nach Anspruch 1, dadurch gekennzeichnet, dass wenn der erste Anschlag (10) durch eine Feder (25) gebildet wird, die vorgenannten Mittel aus einer, in einer in dem Körper (1) gebildeten Ausparung angeordneten, mit der Feder (25) auf der anderen Seite der Membran (5) etwa fluchtend gelegenen Kugel (26) bestehen, welche fähig ist, ein in der besagten Membran gebildetes Loch (28) zu verschliessen.

4. Gerät nach Anspruch 3, gekennzeichnet durch einen mit dem Deckel (4) festverbundenen und in der Achse der Feder (25) und des Loches (28) angeordneten Stift (29).

5. Gerät nach Anspruch 1, dadurch gekennzeichnet, dass die vorgenannten Mittel durch ein, eine Ausgleichstange (30) bildendes, mit einem oder mehreren, in der Membran (5) angeordnete Öffnungen (32) verschliessenden Ventil oder Ventilen (31) dank zwischen dieser und der Ausgleichstange vorgesehenen Federn (33) gekoppeltes Element gebildet werden, während der erste Anschlag (10) mit der Membran über die besagte Ausgleichstange zusammenwirkt.

6. Gerät nach Anspruch 1, dadurch gekennzeichnet, dass die vorgenannten Mittel durch ein, im Inneren des Gaseinlassanschlusstückes (2) in dem Körper (1) des Gerätes untergebrachtes und mit der Membran (5) zusammenwirkendes Ventil (34) mit Feder (35) gebildet werden, während auf der anderen Seite der Membran, der erste Anschlag (10) gleitbar in dem, mit dem Deckel (4) des Gerätes festverbunden Gehäuse (39) angeordnet und in diesem zurückgehalten ist.

7. Gerät nach Anspruch 6, dadurch gekennzeichnet, dass der erste Anschlag (10) durch einen, mit einer, mit durch eine Feder (43) beaufschlagten Kugeln (42) zusammenwirkenden Rille (41) versehenen Stift (40) gebildet wird.

8. Gerät nach Anspruch 6 oder 7, dadurch gekennzeichnet, dass das vorgenannte Gehäuse in dem unteren Bereich und der Membran gegenüberliegend einen etwa kegelförmigen, ausmündenden Teil (39a) und in dem oberen Bereich einen Deckel (44) zum Zugang zum Gehäuse aufweist.

**Claims**

1. A gas pressure reducing apparatus of the type comprising a casing (1) having a gas inlet connection (2) and a gas outlet connection (3), a cover (4) mounted upon this casing, a manometric membrane (5) mounted between the casing and the cover and comprising two faces subjected to the pressure of the gas to be controlled and to the action of an adjustment spring (8) respectively, and at least a first abutment (10) extending from the cover (4) towards the interior of the apparatus and onto which a rigid portion of said membrane is adapted to bear and pivot, the position of said abutment (10) on the cover being such that it divides said membrane into two unequal surfaces so that said membrane fulfils the function of a lever adapted to close the gas inlet into the casing of the apparatus, characterized in that said membrane (5) co-operating with the first abutment (10) co-operates also with safety valve or relief valve means in case of abnormal increase in the gas pressure within the casing (1) of the apparatus.

2. Apparatus according to claim 1, characterized in that the first abutment (10) being constituted by a spring (22). The said means are constituted by another abutment (23) connected with the casing (1) of the apparatus, located substantially below and aligned with the spring (22) on the other side of the membrane (5) and provided with a bore or the like (24) opening into the said casing, adapted to be closed by the said membrane and communicating with the external atmosphere.

3. Apparatus according to claim 1, characterized in that the first abutment (10) being constituted by a spring (25) the said means are constituted by a ball (26) accommodated in a recess (27) formed in the casing (1), located substantially below and aligned with the spring (25) on the other side of the membrane (5) and adapted to close a hole (28) provided in the said membrane.

4. Apparatus according to claim 3, characterized by a stem (29) connected with the cover (4) and extending along the axis of the said spring (25) and hole (28).

5. Apparatus according to claim 1, characterized in that the said means are constituted by a compensator element (30) coupled to one or several valve closures (31) closing orifices (32) provided in the membrane (5) under the action of springs (33) provided between the latter and the compensator, whereas the first abutment (10) co-operates with membrane through the medium of the said compensator.

6. Apparatus according to claim 1, characterized in that the said means are constituted by a valve closure (34) with a spring (35) accommodated within the connection (2) for the admission of the gas into the casing (1) of the apparatus and co-operating with the membrane (5), whereas on the other side of the membrane, the first abutment (10) is mounted slidingly and retained in a housing (39) connected with the cover (4) of the apparatus.

7. Apparatus according to claim 6, characterized in that the first abutment (10) is constituted by a stem (40) provided with a groove (41) co-operating with balls (42) acted upon by a spring (43).

8. Apparatus according to claim 6 or 7, characterized in that the said housing includes at its lower portion a substantially conical opening portion (39a) directed towards the membrane and at its top a cover (44) for access to the internal space of the housing.

Fig.1

Fig.2

Fig.5

Fig. 3

Fig. 4